# EUROPEAN PATENT SPECIFICATION

(11) **EP 4 445 597 B1**
(45) Date of publication and mention of the grant of the patent: **08.07.2026**
(21) Application number: 22814453.1
(22) Date of filing: 14.11.2022
(51) Int. Cl.: H04L 67/1021, H04L 67/148, H04L 67/51, H04L 67/52, H04L 67/53, H04W 24/04, H04W 4/029, H04W 36/32, H04L 67/289, H04W 4/02, H04W 4/40

(54) **SERVICE PROVISION**
DIENST-BEREITSTELLUNG
OFFRE DE SERVICE

(30) Priority: 10.12.2021 GB 202117853
(43) Date of publication of application: 16.10.2024
(73) Proprietor: British Telecommunications public limited company, London, Greater London E1 8EE (GB)
(72) Inventor: CRISTINA, Claudia, London Greater London E1 8EE (GB); WALLWORK, Matthew, London Greater London E1 8EE (GB); BAYAKLY, Fadi, London Greater London E1 8EE (GB); WILKS, David, London Greater London E1 8EE (GB); BEDDUS, Simon, London Greater London E1 8EE (GB)
(74) Representative: British Telecommunications public limited company Intellectual Property Department
(86) International application number: PCT/EP2022/081829
(87) International publication number: WO 2023/104439

(56) References cited:
- WO-A1-2020/227435
- WO-A1-2021/067140
- US-A1- 2019 158 606
- MACH PAVEL ET AL: "Mobile Edge Computing: A Survey on Architecture and Computation Offloading", vol. 19, no. 3, 1 January 2017 (2017-01-01), pages 1628 - 1656, XP055895691, Retrieved from the Internet <URL:https://ieeexplore.ieee.org/stampPDF/getPDF.jsp?tp=&arnumber=7879258&ref=aHR0cHM6Ly9pZWVleHBsb3JlLmllZWUub3JnL2RvY3VtZW50Lzc4NzkyNTg=> DOI: 10.1109/COMST.2017.2682318

## Description

### Field of the Invention

The present invention relates to the provision of a service for a mobile entity, such as an unmanned vehicle. In particular, it relates to the deployment of a service to edge compute nodes of a radio access network that are dispersed throughout a geographical area that the mobile entity will be travelling through.

### Background to the Invention

The use of unmanned vehicles is growing rapidly and the range of fields within which such vehicles are being applied is ever increasing, especially in the case of unmanned aerial vehicles (or drones). Unmanned vehicles are vehicles which do not have an on-board driver and, in some cases, do not have any human being present within the vehicle. Unmanned vehicles can be programmed to carry out various operations autonomously without needing any human intervention. However, for some operations, it is necessary (or at least desirable) for the autonomous vehicle to interact with a remote operator. For example, where a mission's parameters have changed, the autonomous vehicle may need to consult with a remote operator for input as to its next action. Similarly, it may be necessary to keep a remote operator informed of the vehicle's current operations to allow them to be monitored for any potential issues that could result. It may also be desirable or necessary to allow a remote operator to take control of the vehicle should the need arise. This may be required, for example, in order to guarantee the safety of anyone in the vicinity of the vehicle. Accordingly, a reliable communications link for allowing a controller to communicate with an unmanned vehicle is a common requirement for unmanned vehicles.

Increasingly, the use cases for unmanned vehicles are involving so-called Beyond Visual Line of Sight (BVLOS) operation, wherein the distance between an operator and the vehicle is large (such that the vehicle is not in the operator's sight). Commonly such use cases involve the unmanned vehicle travelling across a reasonably large geographic area. As a result, the vehicle is likely to also be beyond range of direct communication with an operator (who may also be referred to as a ground station). It is therefore common to make use of communications networks, such as radio access networks (e.g. 3G, 4G, 5G networks), to allow the operator to communicate with the vehicle in such scenarios. Various overlay network services may be used to facilitate communication between an operator and an unmanned vehicle (or between the unmanned vehicle and an application service that provides service that support the operation of the unmanned vehicle). For example, it is common to make use of a virtual private network (VPN) service that is hosted in a centralised cloud computing infrastructure to secure the communications with the unmanned vehicle using encryption and thereby prevent unwanted eavesdropping or tampering of the vehicle's control commands or telemetry.

WO 2021067140 A1 relates to edge computing mechanisms for network congestion identification and control, and for providing predicted QoS notifications. WO2020227435A1 relates to techniques for implementing Vehicle-to-Everything (V2X) communications in Multi-access Edge Computing (MEC) systems and networks. US 20190158606 A1 relates to an architecture to perform resource management among multiple network nodes and associated resources. The paper "Mobile Edge Computing: A Survey on Architecture and Computation Offloading" by Pavel Mach et al in IEEE Communications Surveys & Tutorials, vol. 19, no. 3, pp. 1628-1656 describes scenarios where MEC is applicable.

### Summary of the invention

As mobile entities, such as unmanned vehicles, move around, the quality of connection that they experience to centrally hosted services, such as a VPN, can vary greatly. For example, the latency of communications with a centrally hosted service may generally increase as the mobile entity moves further from the location at which the cloud computing infrastructure is hosted. Some applications, particularly those associated with controlling unmanned vehicles (and especially unmanned aerial vehicles) may be particularly sensitive to such variations. For example, latency of communications between an unmanned aerial vehicle and a controller may be required to be maintained below a particular threshold to ensure responsiveness and safety.

Accordingly, it would be beneficial to mitigate these disadvantages.

In a first aspect of the invention, there is provided a computer implemented method of deploying a service to edge compute nodes located at the edge of a radio access network that are dispersed throughout a geographical area, the method comprising: receiving a travel plan for a mobile entity, the travel plan indicating a route for an intended journey by the mobile entity through the geographical area; selecting at least one edge compute node in the network for providing the service to the mobile entity during the intended journey, the at least one edge compute node being selected based, at least in part on a geographical proximity of the at least one edge compute node to the route; deploying a respective instance of the service to each of the at least one edge compute nodes so that it is accessible by the mobile entity while undertaking the intended journey; and providing a communications plan to the mobile entity, the communications plan indicating how the at least one instance of the service can be accessed during the intended journey.

In a second aspect of the invention, there is provided a computer implemented method performed by a mobile entity of accessing a service provided by edge compute nodes located at the edge of a radio access network that are dispersed throughout a geographical area, the method comprising: providing a travel plan to the radio access network, the travel plan indicating a route for a journey that the mobile entity intends to make through the geographical area; receiving a communications plan from the radio access network, the communications plan indicating how the service can be accessed during the intended journey from at least one of the edge compute nodes; and using the communications plan to access the service by communicating with the at least one edge compute node whilst undertaking the journey.

In a third aspect of the invention, there is provided a computer system comprising a processor and a memory storing computer program code for performing the steps of a method according to either one of the first or second aspect.

In a fourth aspect of the invention, there is provided a computer program which, when executed by one or more processors, is arranged to carry out a method according to either one of the first or second aspect.

### Brief Description of the Figures

Embodiments of the present invention will now be described by way of example only, with reference to the accompanying drawings, in which:
Figure 1 is a block diagram of a computer system suitable for the operation of embodiments of the present invention.
Figure 2 is a diagrammatic representation of an exemplary radio access network within which embodiments of the invention may operate.
Figure 3 is a flowchart illustrating a computer implemented method of deploying a service to the edge compute nodes according to embodiments of the invention.
Figure 4 is a flowchart illustrating a computer implemented method of accessing a service provided by edge compute nodes located at the edge of a radio access network according to embodiments of the invention.

### Detailed Description of Embodiments

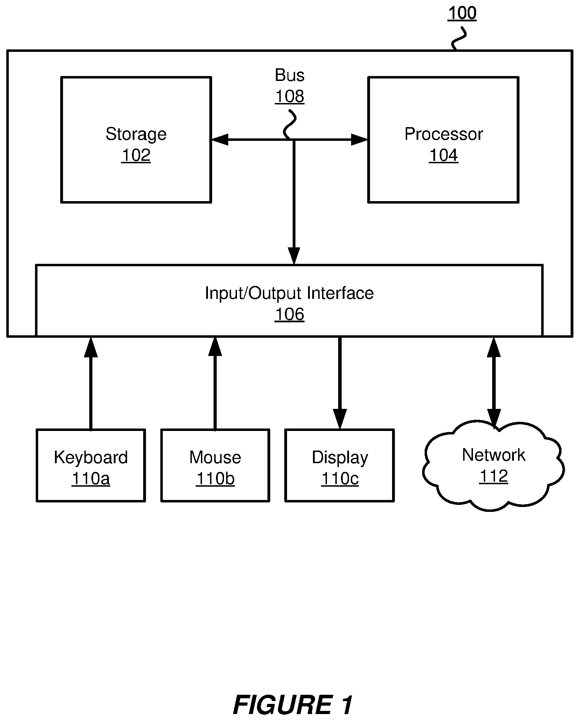

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 110c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 100 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

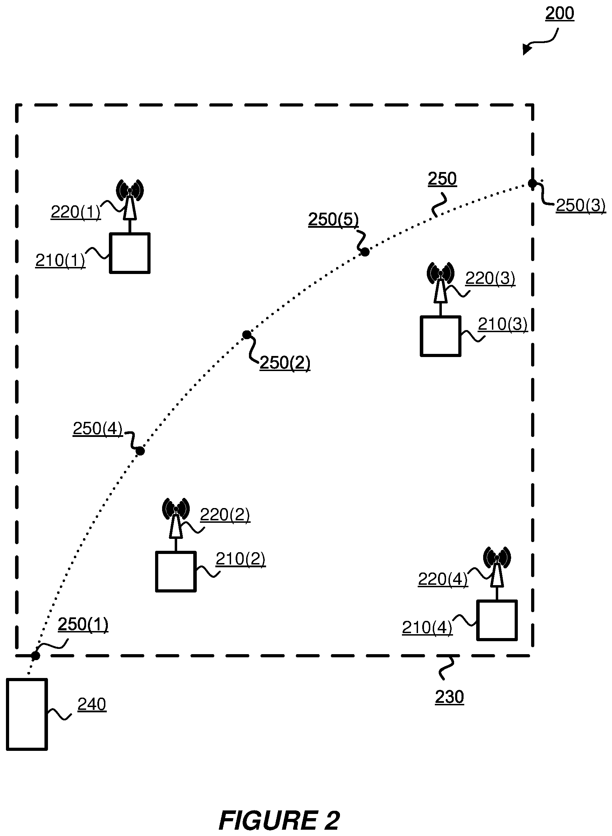

Figure 2 is a diagrammatic representation of an exemplary radio access network 200 within which embodiments of the invention may operate. The radio access network 200 comprises a plurality of edge compute nodes 210. Each edge compute node 210 is associated with a respective radio access node 220.

Entities that are within range of a radio access node 220 can form a wireless connection to the radio access node 220 through which they can communicate with the associated edge compute node 210. Furthermore, each of the edge compute nodes 210 and the associated radio access nodes 220 have a backhaul connection (not shown) to a backbone network (also not shown). Any entities connecting to a radio access node 220 may therefore be enabled to communicate with other computer systems and networks (such as the internet) via the backhaul connection and the backbone network. The edge compute nodes 210 are so called because they are located on the edge of the radio access network 200 (as opposed to being at the core). That is, each edge compute node 210 is deployed in close proximity to a respective radio access node 220 through which entities connect to the network 200. Accordingly, any entities connecting through that radio access node 220 will be able to interact with the edge compute node 210 with much lower latency than with any other computer systems that may be located in the backbone network or on other interconnected networks, such as in the cloud. Similarly, the latency of communication with a service instance hosted on the edge compute node is also likely to be lower. This is because the communications with the edge compute node 210 only need to travel through the associated radio access node 220 and do not additionally need to traverse the backhaul connection, backbone network and any other networks that may be required to reach a more centralised computer system. This arrangement may also be referred to as mobile edge compute (MEC) to distinguish it from other types of edge computing configurations (such as where computational tasks are pushed from centralised computing nodes, such as the cloud, onto an end device itself). A service orchestrator (not shown) can be used to deploy instances of services to the edge compute nodes 210 in order to reduce the distance between an end computing device and the service, as will be described in more detail below.

Although the radio access network 200 illustrated in figure 2 comprises four edge compute nodes 210(1), 210(2), 210(3) and 210(4) (and four associated radio access nodes 220(1), 220(2), 220(3) and 220(4)), it will be appreciated that this is intended to provide a simplified example to aid explanation of the invention and that the invention may equally be used with radio access networks comprising any number of edge compute nodes (and associated radio access nodes) may be used. Indeed, it may generally be expected that a radio access network will include many more edge compute nodes (and associated radio access nodes) than are illustrated in figure 2.

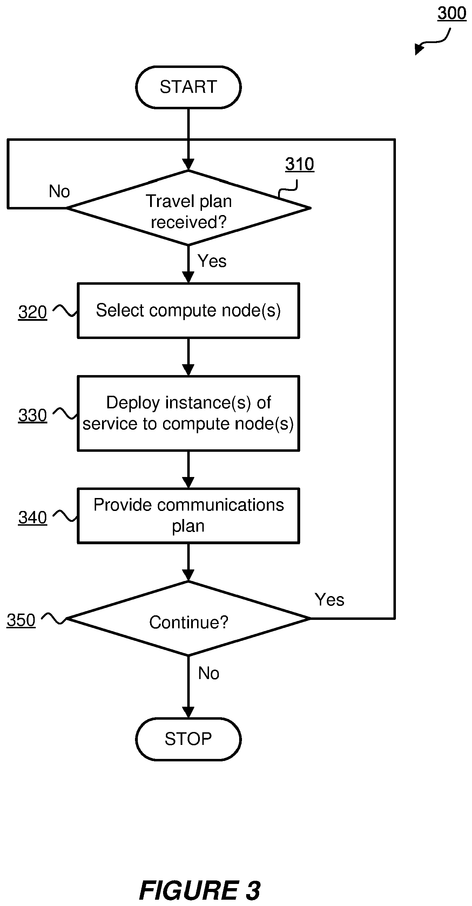

The exemplary radio access network 200 will now be discussed further in conjunction with figure 3, which is a flowchart illustrating a computer implemented method 300 of deploying a service to the edge compute nodes 210 according to embodiments of the invention, such as may be performed by computer system 100. The service that is to be deployed by the method 300 is a service that will be used by a mobile entity 240 as it undertakes a journey 250 through the geographical area 230 covered by the radio access network 200.

In the following description, examples will be described in which the mobile entity is an unmanned aerial vehicle (UAV). However, it will be appreciated that the invention can also be applied to the deployment of network services for other types of unmanned vehicles, such as an unmanned ground vehicle (UGV), or indeed, to any other types of mobile entities that may move within the geographical area 230 covered by the radio access network. Indeed, where the ground control station for an unmanned vehicle is also mobile (i.e. where the ground control station may be considered to be a mobile entity), the same techniques may also be used to provide services to the ground control station as well as the unmanned vehicle (e.g. to facilitate communication between the two).

Similarly, in the following description, the service that is deployed is a network service, such as a network service that forms part of an overlay network for facilitating communication with a mobile entity, such as an unmanned vehicle, like a UAV. For example, the network service may provide any combination of: a virtual private network (VPN) service, a domain name system (DNS) service, a malware detection service, a malware prevention service, an intrusion detection system (IDS) service, an intrusion prevention system (IPS) service, a firewall service and/or a dynamic host configuration protocol (DHCP) service. However, it will be appreciated that in some cases, other types of services may be deployed (in addition or as an alternative to a network service), such as an application service for an unmanned vehicle or indeed any other service that may be used by a mobile entity 240 as it travels through the geographical area 230.

At an operation 310, the method 300 receives a travel plan for a mobile entity 240 (or else waits until such a travel plan is received). The travel plan indicates a route 250 for an intended journey that the mobile entity 240 is planning to make through (or within) the geographical area 230 covered by the radio access network 200.

In some cases, the travel plan may be received directly from the mobile entity 240. However, in other cases, especially where the mobile entity 240 is an autonomous vehicle, the travel plan for the mobile entity 240 may be received from another computer system 100 that is responsible for planning a mission for the mobile entity 240.

Any suitable means for describing the planned route 250 in the travel plan can be used. For example, the route 250 may be described as a sequence of waypoints along the route with straight sections between the waypoints.

The travel plan may also include other details about the mobile entity or the planned journey. For example, the travel plan may identify the mobile entity 240 or a type of the mobile entity 240, or otherwise convey parameters about the mobile entity's configuration, performance and/or communication abilities and/or requirements. Similarly, details about the planned journey, such as a start time may also be included in the travel plan.

In any case, having received the travel plan, the method 300 proceeds to an operation 320.

At operation 320, the method 300 selects at least one edge compute node 210 in the network for providing the network service to the mobile entity 240 during the intended journey. The edge compute nodes 210 that are selected are selected based, at least in part, on their proximity to the route 250 that the mobile entity 240 intends to travel on.

In some simple cases, a single compute node 210 could be selected (e.g. where the geographical area 230 is sufficiently small that it could be covered by a single compute node 210 and associated radio access node 220). The selection of that node 210 may be the node which is closest, on average, to all parts of the route 250. For example, the compute node 210(1) might be selected to provide the service across the entirety of the route 250 based on a determination that it is closest (on average) to all of the points on the route (within the geographic area 230).

However, generally, it is to be expected that a plurality of edge compute nodes 210 will need to be selected in order to cover the entire route 250. Accordingly, each selected compute node 210 may be selected for providing the service to the mobile entity over a particular portion of the route 250. For example, the compute node 210(2) might be selected to provide the service across a first portion of the route 250 between a first point 250(1) and a second point 250(2), whilst the compute node 210(3) might be selected to provide the service across a second portion of the route 250 between the second point 250(2) and a third point 250(3).

Where multiple edge compute nodes 210 are to be selected, there are many approaches that may be adopted. For example, the route may be portioned into segments of equal length and a compute node 210 selected for each segment. As an alternative example, compute nodes 210 may be selected in turn and associated with a portion of the route for which they are the closest node 210. That is to say, a compute node 210 that is closest to any point may be identified and associated with those parts of the route for which it is closer than any other compute node 210, then the next closest compute node 210 may be selected and associated with any uncovered part of the route to which it is the closest node 210 and so on until the entire route has been covered. As yet a further example, a threshold distance may be defined and all compute nodes that are within that threshold distance of any part of the route 250 may be selected. This threshold distance may be adjusted until the entire route 250 has been covered. Similarly, the selected compute nodes 210 (or the portions of the route to which they are associated) may subsequently be pruned to limit the number of compute nodes 210 that are providing the service over any particular part of the route 250. Indeed, in general, the problem of selecting compute nodes can be viewed as an optimization problem to minimise the distance between the selected compute nodes 210 and the respective portions of the route 250 over which they are to provide the service to the mobile entity 240 and any suitable technique for arriving at an optimal (or near optimal) solution to the problem may be used.

In some cases, more than one edge compute node 210 may be selected for providing the network service to the mobile entity 240 during at least part of the route. That is to say, there are portions of the route for which there are multiple compute nodes 210 available for providing the service to the mobile entity 240. In some cases, the service may be accessible from multiple edge compute nodes 210 across the entirety of the route 250 (with the edge compute nodes 210 being selected appropriately to achieve this). This can provide the mobile entity 240 with a choice as to which compute node 210 to connect to for accessing the service whilst it is undertaking the journey 250 allowing current conditions to be accounted for. For example, one of the compute nodes 210 selected for providing the network service may be treated as primary connection point for accessing the service, whilst another one of the compute nodes 210 may be treated as a backup connection point for accessing the service in the event that the primary connection point is uncontactable (or where communications with the primary connection point are sufficiently poor). Returning to the exemplary radio access network 200 illustrated in figure 2 where the compute node 210(2) was selected to provide the service across the first portion of the route 250 between the first point 250(1) and the second point 250(2) and the compute node 210(3) was selected to provide the service across the second portion of the route 250 between the second point 250(2) and the third point 250(3), the compute node 220(1) may additionally be selected to provide the service across the part of the route between a fourth point 250(4) and a fifth point 250(5). Accordingly, when the mobile entity 240 undertakes that part of the route between the fourth point 250(4) and the fifth point 250(5) there will be two compute nodes 210 available for accessing the service from. Specifically, during the part of the journey 250 between the fourth point 250(4) and second point 250(2), the service will be accessible via either compute node 210(1) or compute node 210(2). Similarly, during the part of the journey 250 between the second point 250(2) and the fifth point 250(5), the service will be accessible via either compute node 210(1) or 210(3). In this example, it will be noted that the first part of the journey between the first and fourth points 250(1) and 250(4) and the last part of the journey between the fifth and third points 250(5) and 250(3) are only serviced by a single compute node (compute nodes 210(2) and 210(3) respectively). Of course, it will be appreciated that in other examples further compute nodes may be selected to cover the first and last parts of the journey such that the entire route 250 is serviced by multiple compute nodes 210. Similarly, although this example has illustrated parts of the route 250 being covered by two compute nodes, it will be appreciated that more compute nodes 210 can be selected for providing the service across parts of the routes (such that the mobile entity will have more than two options for accessing the service while transiting those parts of the route 250).

The proximity of the compute nodes 210 to the route 250 (or portions of the route) may be directly determined from the distance between the geographical locations of the compute nodes 210 and the route 250. However, other factors may be used as a proxy to using the distance directly (or alternatively used as additional factors in the selection of the compute nodes 210). For example, the method 300 may have access to previously recorded measurements between the radio access nodes 220 associated with each compute node 210 and radio stations (whether mobile or otherwise). The method 300 may then use these previously recorded measurements of communications with radio stations in proximity to the route 250 when selecting the compute nodes 210. For example, these measurements may include one or more (or all) of a latency measurement; a received signal strength indication (RSSI) measurement; a signal-to-noise ratio (SNR) measurement; a bandwidth measurement; and/or an error-rate measurement. As will be appreciated by the skilled person, such measurements may also be used to ensure that the most appropriate compute node(s) is selected for providing the service during the mobile entity's intended journey 250 (i.e. those compute node(s) 210 with which the mobile entity 240 will be best able to communicate during each part of its journey).

In some cases, other factors may also be taken into account when selecting which edge compute nodes 210 should provide the service to the mobile entity 240 during the journey. For example, the amount of available computing power (or compute load) expected to be available at each compute node 210 at the time that the mobile entity 240 is planning to undertake the journey can be taken into consideration (e.g. in relation to the computational cost or performance requirements for providing the service). Of course, any other relevant factors can also be taken into account during the selection of edge compute nodes 210 at operation 320 as will be understood by those skilled in the art.

In any case, having selected at least one edge compute node 210 for providing the network service to the mobile entity 240 during the intended journey 250, the method 300 proceeds to an operation 330.

At operation 330, the method 300 deploys a respective instance of the network service to each of the selected edge compute node(s) 210. In some cases the method 300 may cause the instances of the network service to be deployed to the selected edge compute node(s) 210 immediately. In other cases, the method 300 may schedule the deployment of the instances of the network service, thereby causing them to be deployed to the selected edge compute node(s) at a later time (such as a time just prior to a scheduled start time of the intended journey 250 by the mobile entity 240). Either way, the method 300 causes the instances to be deployed in such a manner that they are accessible by the mobile entity 240 while it undertakes the intended journey 250 (i.e. in advance of them being needed by the mobile entity 240).

Where different edge compute nodes 210 are selected to provide the service during different portions of the journey 250, the instances of the service that are deployed to those edge compute nodes 210 only need to be deployed prior to the time that the mobile entity will start travelling on those portions of the route 250. Accordingly, some instances of the network service may be deployed after the mobile entity 240 has already begun the intended journey 250. For example, with reference to the previously discussed examples, where edge compute node 220(3) is selected for providing the service to the mobile entity over a portion of the route 250 between the second and third points 250(2) and 250(3), the instance of the network service may only be deployed to that edge compute node 220(3) after the mobile entity 240 has already begun the journey 250 (e.g. the instance may be deployed while the mobile entity is traversing the first portion of the route between the first and second points 250(1) and 250(2)) provided that it is deployed before the mobile entity 250 reaches the second point 250(2) on the journey.

As will be appreciated, delaying deployment of the instances of the service until closer to the time that they are needed by the mobile entity 240 will generally reduce the consumption of computing resources of the edge compute nodes 210 by preventing the instance of the service from running when it is not needed.

In a similar way, the method 200 may also cause the instances of the network service to be removed when they are no longer needed by the mobile entity 240. For example, the method 200 may schedule the instances of the network service to be removed from the edge compute nodes 210 at some time after the mobile entity 240 is expected to have finished the journey 250 (provided that the mobile entity 250 has stopped accessing the network service via that compute node 210). Again, where different edge compute nodes 210 are selected to provide the service during different portions of the journey 250, the instance of a network service may be removed (or scheduled for removal) after the mobile entity 240 has completed the respective portion of the route over which that instance is to provide the network service to the mobile entity 240. For example, with reference to the previously discussed examples, where edge compute node 220(2) is selected for providing the service to the mobile entity over a portion of the route 250 between the first and second points 250(1) and 250(2), the instance of the network service deployed to edge compute node 220(2) can be removed after the mobile entity 240 has completed that portion of the route 250 even if the mobile entity 240 is still undertaking the journey (e.g. the instance may be removed while the mobile entity is traversing the second portion of the route between the second and third points 250(2) and 250(3)).

Preferably, where different edge compute nodes 210 are selected to provide the service during different portions of the journey 250, the instances of the network service that are deployed are configured such that the mobile entity can maintain the same configuration when transitioning between the different instances of the network service that are deployed to those edge compute nodes. For example, the instances of the network service may be configured such that they are accessible via the same network address (e.g. IP address). Similarly, the keys used to authenticate the service (and/or authenticate the mobile entity to the service) to allow secure communication may be configured to be the same for each network service instance.

In addition to deploying (or causing deployment of) instances of the network service to the selected edge compute nodes 210, the method 200 may, in some cases, also deploy one or more additional services to those edge compute nodes 210 which will also be needed by the mobile entity 240. For example, the method 200 may additional deploy instances of an application service for the unmanned vehicle to each of the edge compute nodes 210 alongside the instances of the network service. As examples, such an application service may comprise one or more, or all of: a control service for controlling the unmanned vehicle; an emergency control service for automatically controlling the unmanned vehicle in the event of a failure in communications with the control server; and a telemetry repository service for capturing telemetry from the unmanned vehicle.

In any case, having deployed instance(s) of the network service to each of the selected edge compute node(s) 210, the method 300 proceeds to an operation 340.

At operation 340, the method 300 provides a communications plan to the mobile entity 240. The communications plan may be directly communicated to the mobile entity 240 or otherwise may be communicated to an intermediate entity, such as a mission planning service for the mobile entity 240 for onward communication to the mobile entity.

The communications plan indicates how the at least one instance of the network services that was selected for providing the service to the mobile entity 240 at operation 320 can be accessed during the intended journey 250. In the simplest cases, the communications plan may simply comprise an ordered list of the compute nodes 210 (or at least their associated radio access nodes 220) that the mobile entity needs to communicate with in order to access the service during the journey. For example, where a single compute node 210 is selected to provide the service, the communications plan may simply list that compute node 210. Otherwise, where the journey is broken up into predetermined portion sizes and an edge compute node 210 selected for each portion, the communications plan may simply list the edge compute nodes 210 (or their associated radio access nodes 220) in order, thereby allowing the mobile entity 250 to switch to the next edge compute node in the list after travelling the predetermined portion size. In other cases, the communications plan may associate an indication of a respective portion of the route 250 over which each edge compute node 210 is to provide the service with each of the edge compute nodes 210 in the communications plan. Where multiple edge compute nodes 210 have been selected for providing the services over parts (or all) of the journey, those edge compute nodes 210 may be listed as different options for accessing the network service during those parts of the journey. In some such cases, the communications plan may further indicate an ordering of the different options (e.g. by indicating that one of edge compute nodes 210 is the primary provider of the service during that part of the journey and another edge compute node 210 is a backup provider of the service during that part of the journey).

In addition to indicating the edge compute nodes 210 (or their associated radio access nodes 220) that are to be used to access the service, the communications plan may additionally include any configuration or parameters required to communicate with the service via those compute nodes 210.

In any case, having provided the communications plan to the mobile entity, the method 300 proceeds to an operation 350.

At an operation 350, the method 300 determines whether to continue processing travel plans for further journeys. If so, it reiterates back to operation 310 to wait for another travel plan to be received. Otherwise, the method 300 ends. It is expected that the method 300 will typically be run as a service, continuing to process travel plans over a long period of time (though this need not be the case). For example, the method 300 may be run alongside (or as part of) a network service orchestration system responsible for deploying service instances to edge compute nodes in a network.

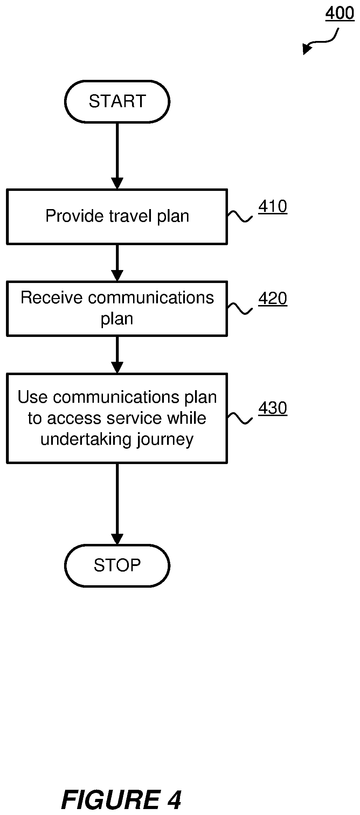

The use of the communications plan by the mobile entity 240 will now be discussed further in conjunction with figure 4, which is a flowchart illustrating a computer implemented method 400 of accessing a service provided by edge compute nodes 210 located at the edge of a radio access network, such as radio access network 200, according to embodiments of the invention.

At an operation 410, the method 400 provides a travel plan to the radio access network 200. As already discussed in relation to operation 310 of method 300, the travel plan indicates a route 250 for a journey that the mobile entity intends to make through the geographical area 230 covered by the radio access network 200. In some cases, the travel plan may be provided to the radio access network 200 directly by the mobile entity 240 itself. However, in other cases, the travel plan may be provided by another system on behalf of the mobile entity 240, such as by a mission planning system responsible for planning missions to be carried out by autonomous vehicles.

At operation 420, the method 400 receives a communications plan from the radio access network 200. As already discussed in relation to operation 340 of method 300, the communications plan indicates how the network service can be accessed during the intended journey from at least one of the edge compute nodes 210 of the radio access network 200. Again, the communications plan may be received from the radio access network 200 directly by the mobile entity 240 itself or may be provided indirectly via another system, such as the mission planning system.

At operation 430, the method 400 uses the communications plan to access the network service by communicating with compute nodes in the manner indicated by the communications plan whilst undertaking the journey 250.

As already discussed, in the simplest cases, the communications plan may simply comprise an ordered list of the compute nodes 210 (or at least their associated radio access nodes 220) that the mobile entity needs to communicate with in order to access the service during the journey. The mobile entity 240 then simply refers to the communication plan to identify the correct compute node 210 (or its associated radio access node 220) to connect to in order to access the service. For example, where a single compute node 210 is indicated in the communications plan to provide the service, the mobile entity 240 may simply connect to that compute node 210 to access the service. Otherwise, where multiple compute nodes 210 are indicated in the communications plan to provide the service, the mobile entity 240 may connect to a first compute node 210 to undertake a first portion of the journey 250 having a predetermined portion size, before connecting to the next compute node 210 indicated in the communications plan to complete the next portion of the journey 250 having the predetermined portion size and so on until the journey 250 has been completed.

Again, as already discussed, in other cases, the communications plan may indicate of a respective portion of the route 250 over which each edge compute node 210 is to provide the service. The mobile entity 240 may then determine an appropriate edge compute node 210 to connect to based on the portion of the journey 250 that the mobile entity 240 is currently undertaking. That is to say, the mobile entity 240 may identify which of the edge compute nodes 210 is associated with a portion of the route which includes the current location of the mobile entity 240 and select one of those edge compute nodes 210 to connect to. Once the mobile entity 240 has completed (or is close to completing) the portion of the route 250 that is covered by the edge compute node 210 that it is currently connected to, the mobile entity 240 may identify the next edge compute node 210 that it should connect to in a similar manner.

Similarly, in some cases, the communications plan may indicate multiple edge compute nodes 210 for accessing the service over parts (or all) of the journey. In such cases, the mobile entity 240 selects one of the edge compute nodes 210 indicated by the communications plan when undertaking those parts of the journey. In some such cases, the communications plan may further indicate an ordering of the different options (e.g. by indicating that one of edge compute nodes 210 is the primary provider of the service during that part of the journey and another edge compute node 210 is a backup provider of the service during that part of the journey), in which case the mobile entity may initially attempt to connect to a highest ordered edge compute node 210 indicated in the communication plan (e.g. an edge compute node 210 intended to be a primary provider of the service) before attempting to connect to lower ordered edge compute nodes 210 indicated in the communication (e.g. an edge compute node 210 intended to be a backup provider of the service) if the connection to higher ordered edge compute node(s) 210 is unsuccessful (or otherwise does not provide some minimal level of service). Of course, it is not necessary for the communications plan to indicate an ordering of the different options (that is, the plurality of compute nodes 210 that are indicated as providing the service over a particular part of the journey) and in such cases, they are indicated without any implied order.

Where there are multiple edge compute nodes 210 that can be selected from to access the service, the method 400 may monitor a respective performance of accessing the network service via each of the edge compute nodes 210 from which the network service may be accessed during that part of the route and may select an edge compute node 210 based on the respective level of performance for each of the monitored edge compute nodes 210. This monitoring may be continued after the mobile entity 240 has connected to one of the edge compute nodes 210 in order to determine whether it would be more effective to switch to a different edge compute node 210 to access the service. For example, the determination to switch may be made in response to detecting that the respective performance of accessing the network service via the currently selected edge compute node is below a predetermined threshold. Additionally or alternatively, the determination to switch may be made in response to detecting that a difference in between the performance of accessing the network service via the currently selected edge compute node and the performance of accessing the network service via another of the edge compute nodes is greater than a predetermined threshold (this predetermined threshold may be configured, for example, to prevent undue switching of connections for only minimal performance gains). As examples, the performance of the communication with an edge compute node 210 (or at least with the radio access node 220 associated with it) may be determined based on one or more, or all, of: a latency measurement; a received signal strength indication (RSSI) measurement; a signal-to-noise ratio (SNR) measurement; a bandwidth measurement; and an error-rate measurement, although of course any other suitable technique for accessing the performance of the communication may be used instead.

As already discussed, the communications plan may also specify any configuration or parameters required to communicate with the service via the compute nodes 210 that are to provide the service during the journey 250. The mobile entity 250 can therefore refer to such configuration and/or parameters in order to communicate with the compute nodes 210 (or the radio access nodes 220 associated with them). In some cases, the compute nodes 210 will have been configured such that the mobile entity 250 can transition between instances of the network service that are provided by different edge compute nodes without need to change its configuration.

Similarly, one or more application services may be co-deployed with the network service for use by the mobile entity 240. These co-deployed services may also be indicated in the communications plan. Alternatively, the co-deployment of these services to be a matter of convention within a system design such that the mobile entity 240 can assume the co-deployment of such service without this needing to be explicitly indicated in the services will be co-deployed. In such cases, the mobile entity 240 may also use the connection to the edge compute node 210 (through the associated radio access node 220) to access such co-deployed services.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method (300) of deploying a service to edge compute nodes (210) located at the edge of a radio access network that are dispersed throughout a geographical area (230), the method comprising:
receiving (310) a travel plan for a mobile entity (240), the travel plan indicating a route (250) for an intended journey by the mobile entity (240) through the geographical area (230);
selecting (320) at least one edge compute node (210) in the network for providing the service to the mobile entity (240) during the intended journey, the at least one edge compute node (210) being selected based, at least in part on a geographical proximity of the at least one edge compute node (210) to the route (250);
deploying (330) a respective instance of the service to each of the at least one edge compute nodes (210) so that it is accessible by the mobile entity (240) while undertaking the intended journey; and
providing (340) a communications plan to the mobile entity (240), the communications plan indicating how the at least one instance of the service can be accessed during the intended journey.

2. The method (300) of claim 1, wherein a plurality of edge compute nodes (210) is selected, each edge compute node (210) being associated with a respective portion of the route (250) over which it is to provide the service to the mobile entity (240) and being selected based, at least in part on a geographical proximity of the edge compute node (210) to the respective portion of the route (250),
optionally wherein deploying the respective instance of the service to each of the edge compute nodes (210) comprises scheduling deployment of each respective instance for a time prior to a time at which the mobile entity (240) is scheduled to start the associated portion of the route (250).
the method (300) optionally comprising:
removing the respective instance of the service deployed to an edge compute node (210) after the mobile entity (240) has completed the respective portion of the route (250) over which that instance is to provide the service to the mobile entity (240).

3. The method (300) of any one of claims 1 or 2, wherein deploying the respective instance of the service to each of the at least one edge compute nodes (210) comprises scheduling deployment of each respective instance for a time prior to a scheduled start of the intended journey by the mobile entity (240).

4. The method (300) of any one of the preceding claims, wherein the selection of an edge compute node (210) is further based on one or more previously recorded measurements of communications between a radio access node (220) associated with the edge compute node (210) and one or more mobile stations in proximity to the route (250), optionally wherein the previously recorded measurements comprise one or more, or all, of:
a latency measurement;
a received signal strength indication, RSSI, measurement;
a signal-to-noise ratio, SNR, measurement;
a bandwidth measurement; and
an error-rate measurement.

5. The method (300) of any one of the preceding claims, wherein more than one edge compute node (210) is selected for providing the service to the mobile entity (240) during at least part of the route (250) and the communications plan indicates a plurality of options for accessing the service during that part of the route (250).

6. The method (300) of any one of the preceding claims, wherein the instances of the service deployed to the plurality of edge compute nodes (210) are configured to allow the mobile entity (240) to maintain the same configuration when transitioning between different instances of the service.

7. A computer implemented method (400) performed by a mobile entity (240) of accessing a service provided by edge compute nodes (210) located at the edge of a radio access network that are dispersed throughout a geographical area (230), the method comprising:
providing (410) a travel plan to the radio access network, the travel plan indicating a route (250) for a journey that the mobile entity (240) intends to make through the geographical area (230);
receiving (420) a communications plan from the radio access network, the communications plan indicating how the service can be accessed during the intended journey from at least one of the edge compute nodes (210); and
using (430) the communications plan to access the service by communicating with the at least one edge compute node (210) whilst undertaking the journey.

8. The method (400) of claim 7, wherein:
the communications plan indicates that the service is to be accessed via a plurality of edge compute nodes (210), each edge compute node (210) being associated with a respective portion of the route (250) during which that edge compute node (210) will provide the service for the mobile entity (240); and
using the communications plan to access the service comprises determining an appropriate edge compute node (210) to communicate with based on the current portion of the journey that is being undertaken.

9. The method (400) of claim 7 or claim 8, wherein:
the communications plan indicates a plurality of options for accessing the service during at least part of the route (250), each option being provided by a respective edge compute node (210) via which the service may be accessed during that part of the route (250); and
using the communications plan to access the service whilst undertaking that part of the route (250) comprises selecting one of the edge compute nodes (210) via which to access the network during that part of the route (250).

10. The method (400) of claim 9, further comprising:
monitoring a respective performance of accessing the service via each of the edge compute nodes (210) via which the service may be accessed during that part of the route (250); and
determining to switch to using a different one of the edge compute nodes (210) to access the service during that part of the route (250) based on the respective performance of accessing the service via each of the edge compute nodes (210),
optionally wherein the determination to switch is made in response to detecting that:
the respective performance of accessing the service via the currently selected edge compute node (210) is below a predetermined threshold; or
a difference in between the performance of accessing the service via the currently selected edge compute node (210) and the performance of accessing the service via another of the edge compute nodes (210) is greater than a predetermined threshold,
optionally wherein the performance is determined based on one or more, or all of:
a latency measurement;
a received signal strength indication, RSSI, measurement;
a signal-to-noise ratio, SNR, measurement;
a bandwidth measurement; and
an error-rate measurement.

11. The method (400) of any one of claims 8 to 10, wherein the mobile entity (240) maintains the same configuration when transitioning between instances of the service on different edge compute nodes (210).

12. The method (400) of any one of claims 7 to 11, wherein the mobile entity (240) is an unmanned vehicle, optionally wherein the mobile entity (240) is an unmanned aerial vehicle.

13. The method (400) of claim 12, wherein the service is a network service for enabling communication between the unmanned vehicle (240) and a control server for controlling the unmanned vehicle (240), optionally wherein the network service provides one or more, or all, of:
a virtual private network, VPN, service;
a domain name system, DNS, service;
a malware detection service;
a malware prevention service;
an intrusion detection system, IDS, service;
an intrusion prevention system, IPS, service;
a firewall service; and
a dynamic host configuration protocol, DHCP, service.

14. The method (400) of claim 13, further comprising accessing a respective instance of an application service for the unmanned vehicle (240) that is deployed to each of the at least one edge compute nodes (210) alongside the instances of the network service, optionally wherein the application service comprises one or more, or all, of:
a control service for controlling the unmanned vehicle (240);
an emergency control service for automatically controlling the unmanned vehicle (240) in the event of a failure in communications with the control server; and
a telemetry repository service for capturing telemetry from the unmanned vehicle (240).

15. A computer system (100) comprising a processor (104) and a memory (102) storing computer program code for performing the method (300, 400) of any one of the preceding claims.

16. A computer program which, when executed by one or more processors, is arranged to carry out a method (300, 400) according to any one of claims 1 to 14.

## Patentansprüche

1. Computerimplementiertes Verfahren (300) zum Bereitstellen eines Dienstes zu am Rand eines Funkzugangsnetzwerks angeordneten Edge-Rechenknoten (210), die über ein geografisches Gebiet (230) verteilt sind, wobei das Verfahren Folgendes umfasst:
Empfangen (310) eines Reiseplans für eine mobile Entität (240), wobei der Reiseplan eine Route (250) für eine beabsichtigte Reise durch die mobile Entität (240) durch das geografische Gebiet (230) angibt;
Auswählen (320) mindestens eines Edge-Rechenknotens (210) in dem Netzwerk zum Bereitstellen des Dienstes zu der mobile Entität (240) während der beabsichtigten Reise, wobei der mindestens eine Edge-Rechenknoten (210) zumindest teilweise basierend auf einer geografischen Nähe des mindestens einen Edge-Rechenknotens (210) zu der Route (250) ausgewählt wird;
Bereitstellen (330) einer jeweiligen Instanz des Dienstes zu jedem der mindestens einen Edge-Rechenknoten (210), so dass die mobile Entität (240) während eines Durchführens der beabsichtigten Reise darauf zugreifen kann; und
Bereitstellen (340) eines Kommunikationsplans zu der mobilen Entität (240), wobei der Kommunikationsplan angibt, wie auf die mindestens eine Instanz des Dienstes während der beabsichtigten Reise zugegriffen werden kann.

2. Verfahren (300) nach Anspruch 1, wobei eine Mehrzahl von Edge-Rechenknoten (210) ausgewählt wird, wobei jeder Edge-Rechenknoten (210) mit einem jeweiligen Abschnitt der Route (250) assoziiert ist, über den er den Dienst zu der mobilen Entität (240) bereitstellen soll, und zumindest teilweise basierend auf einer geografischen Nähe des Edge-Rechenknotens (210) zu dem jeweiligen Abschnitt der Route (250) ausgewählt wird,
wobei optional das Bereitstellen der jeweiligen Instanz des Dienstes zu jedem der Edge-Rechenknoten (210) Planen einer Bereitstellung jeder jeweiligen Instanz für eine Zeit vor einer Zeit, zu der die mobile Entität (240) planmäßig den assoziierten Abschnitt der Route (250) beginnen soll, umfasst.
wobei das Verfahren (300) optional Folgendes umfasst: Entfernen der jeweiligen Instanz des zu dem Edge-Rechenknoten (210) bereitgestellten Dienstes, nachdem die mobile Entität (240) den jeweiligen Abschnitt der Route (250) abgeschlossen hat, über den diese Instanz den Dienst zu der mobilen Entität (240) bereitstellen soll.

3. Verfahren (300) nach einem der Ansprüche 1 oder 2, wobei das Bereitstellen der jeweiligen Instanz des Dienstes zu jedem der mindestens einen Edge-Rechenknoten (210) Planen einer Bereitstellung jeder jeweiligen Instanz für eine Zeit vor einem geplanten Beginn der beabsichtigten Reise durch die mobile Entität (240) umfasst.

4. Verfahren (300) nach einem der vorhergehenden Ansprüche, wobei die Auswahl eines Edge-Rechenknotens (210) ferner auf einer oder mehreren zuvor aufgezeichneten Messungen von Kommunikationen zwischen einem Funkzugangsknoten (220), der mit dem Edge-Rechenknoten (210) assoziiert ist, und einer oder mehreren Mobilstationen in der Nähe der Route (250) basiert, wobei optional die zuvor aufgezeichneten Messungen eines oder mehrere oder alle von Folgendem umfassen:
eine Latenzmessung;
eine Empfangssignalstärkenangabe-, RSSI-, Messung;
eine Signal-Rausch-Verhältnis-, SNR-, Messung;
eine Bandbreitenmessung; und
eine Fehlerratenmessung.

5. Verfahren (300) nach einem der vorhergehenden Ansprüche, wobei mehr als ein Edge-Rechenknoten (210) zum Bereitstellen des Dienstes zu der mobilen Entität (240) während mindestens eines Teils der Route (250) ausgewählt wird und der Kommunikationsplan eine Mehrzahl von Optionen zum Zugreifen auf den Dienst während dieses Teils der Route (250) angibt.

6. Verfahren (300) nach einem der vorhergehenden Ansprüche, wobei die Instanzen des zu der Mehrzahl von Edge-Rechenknoten (210) bereitgestellten Dienstes so konfiguriert sind, dass der mobilen Entität (240) ermöglicht wird, die gleiche Konfiguration bei einem Wechsel zwischen unterschiedlichen Instanzen des Dienstes beizubehalten.

7. Computerimplementiertes Verfahren (400), das durch eine mobile Entität (240) durchgeführt wird, zum Zugreifen auf einen Dienst, der durch am Rand eines Funkzugangsnetzwerks angeordnete Edge-Rechenknoten (210) bereitgestellt wird, die über ein geografisches Gebiet (230) verteilt sind, wobei das Verfahren Folgendes umfasst:
Bereitstellen (410) eines Reiseplans zu dem Funkzugangsnetzwerk, wobei der Reiseplan eine Route (250) für eine Reise angibt, die die mobile Entität (240) durch das geografische Gebiet (230) zu machen beabsichtigt;
Empfangen (420) eines Kommunikationsplans von dem Funkzugangsnetzwerk, wobei der Kommunikationsplan angibt, wie während der beabsichtigten Reise von mindestens einem der Edge-Rechenknoten (210) auf den Dienst zugegriffen werden kann; und
Verwenden (430) des Kommunikationsplans, um durch Kommunizieren mit dem mindestens einen Edge-Rechenknoten (210) während eines Durchführens der Reise auf den Dienst zuzugreifen.

8. Verfahren (400) nach Anspruch 7, wobei:
der Kommunikationsplan angibt, dass auf den Dienst über eine Mehrzahl von Edge-Rechenknoten (210) zugegriffen werden soll, wobei jeder Edge-Rechenknoten (210) mit einem jeweiligen Abschnitt der Route (250) assoziiert ist, während dem dieser Edge-Rechenknoten (210) den Dienst für die mobile Entität (240) bereitstellen wird; und
das Verwenden des Kommunikationsplans, um auf den Dienst zuzugreifen, Bestimmen eines geeigneten Edge-Rechenknotens (210) zur Kommunikation basierend auf dem aktuellen Abschnitt der durchgeführten Reise umfasst.

9. Verfahren (400) nach Anspruch 7 oder Anspruch 8, wobei:
der Kommunikationsplan eine Mehrzahl von Optionen zum Zugreifen auf den Dienst während mindestens eines Teils der Route (250) angibt, wobei jede Option durch einen jeweiligen Edge-Rechenknoten (210) bereitgestellt wird, über den während dieses Teils der Route (250) auf den Dienst zugegriffen werden kann; und
das Verwenden des Kommunikationsplans, um während eines Durchführens dieses Teils der Route (250) auf den Dienst zuzugreifen, Auswählen eines der Edge-Rechenknoten (210), über den während dieses Teils der Route (250) auf das Netzwerk zugegriffen werden soll, umfasst.

10. Verfahren (400) nach Anspruch 9, ferner umfassend:
Überwachen einer jeweiligen Leistungsfähigkeit beim Zugreifen auf den Dienst über jeden der Edge-Rechenknoten (210), über die während dieses Teils der Route (250) auf den Dienst zugegriffen werden kann; und
Bestimmen eines Umschaltens auf eine Verwendung eines anderen der Edge-Rechenknoten (210), um auf den Dienst während dieses Teils der Route (250) zuzugreifen, basierend auf der jeweiligen Leistungsfähigkeit beim Zugreifen auf den Dienst über jeden der Edge-Rechenknoten (210),
wobei optional die Bestimmung eines Umschaltens als Reaktion auf ein Detektieren erfolgt, dass:
die jeweilige Leistungsfähigkeit beim Zugreifen auf den Dienst über den aktuell ausgewählten Edge-Rechenknoten (210) unter einem vorbestimmten Schwellenwert liegt; oder eine Differenz zwischen der Leistungsfähigkeit beim Zugreifen auf den Dienst über den aktuell ausgewählten Edge-Rechenknoten (210) und der Leistungsfähigkeit beim Zugreifen auf den Dienst über einen anderen der Edge-Rechenknoten (210) größer als ein vorbestimmter Schwellenwert ist,
wobei optional die Leistungsfähigkeit basierend auf einem oder mehreren oder allen von Folgendem bestimmt wird:
einer Latenzmessung;
einer Empfangssignalstärkenangabe-, RSSI-, Messung;
einer Signal-Rausch-Verhältnis-, SNR-, Messung;
einer Bandbreitenmessung; und
einer Fehlerratenmessung.

11. Verfahren (400) nach einem der Ansprüche 8 bis 10, wobei die mobile Entität (240) bei einem Wechsel zwischen Instanzen des Dienstes auf unterschiedlichen Edge-Rechenknoten (210) die gleiche Konfiguration beibehält.

12. Verfahren (400) nach einem der Ansprüche 7 bis 11, wobei die mobile Entität (240) ein unbemanntes Fahrzeug ist, wobei optional die mobile Entität (240) ein unbemanntes Luftfahrzeug ist.

13. Verfahren (400) nach Anspruch 12, wobei der Dienst ein Netzwerkdienst zum Ermöglichen einer Kommunikation zwischen dem unbemannten Fahrzeug (240) und einem Steuerserver zum Steuern des unbemannten Fahrzeugs (240) ist, wobei optional der Netzwerkdienst eines oder mehrere oder alle von Folgendem bereitstellt:
einen virtuellen privaten Netzwerk-, VPN-, Dienst;
einen Domänennamensystem-, DNS-, Dienst;
einen Schadsoftwaredetektionsdienst;
einen Schadsoftwarepräventionsdienst;
einen Angrifferkennungssystem-, IDS-, Dienst;
einen Angriffpräventionssystem-, IPS-, Dienst;
einen Firewall-Dienst; und
einen Dynamic Host Configuration-Protokoll-, DHCP-, Dienst.

14. Verfahren (400) nach Anspruch 13, ferner umfassend Zugreifen auf eine jeweilige Instanz eines Anwendungsdienstes für das unbemannte Fahrzeug (240), der zu jedem der mindestens einen Edge-Rechenknoten (210) neben den Instanzen des Netzwerkdienstes bereitgestellt wird, wobei optional der Anwendungsdienst eines oder mehrere oder alle von Folgendem umfasst:
einen Steuerungsdienst zum Steuern des unbemannten Fahrzeugs (240);
einen Notfallsteuerungsdienst zum automatischen Steuern des unbemannten Fahrzeugs (240) im Falle eines Ausfalls einer Kommunikation mit dem Steuerserver; und
einen Telemetrie-Repository-Dienst zum Erfassen von Telemetrie von dem unbemannten Fahrzeug (240).

15. Computersystem (100), das einen Prozessor (104) und einen Speicher (102) umfasst, der Computerprogrammcode zum Durchführen des Verfahrens (300, 400) nach einem der vorhergehenden Ansprüche speichert.

16. Computerprogramm, das, wenn es durch einen oder mehrere Prozessoren ausgeführt wird, dazu eingerichtet ist, ein Verfahren (300, 400) nach einem der Ansprüche 1 bis 14 auszuführen.

## Revendications

1. Procédé mis en œuvre par ordinateur (300) de déploiement d'un service jusqu'à des nœuds de calcul périphériques (210) situés à la périphérie d'un réseau d'accès radio qui sont dispersés dans la totalité d'une zone géographique (230), le procédé comprenant :
la réception (310) d'un plan de déplacement pour une entité mobile (240), le plan de déplacement indiquant un itinéraire (250) pour un parcours prévu, par l'entité mobile (240), à travers la zone géographique (230) ;
la sélection (320) d'au moins un nœud de calcul périphérique (210) dans le réseau pour fournir le service à l'entité mobile (240) durant le parcours prévu, l'au moins un nœud de calcul périphérique (210) étant sélectionné sur la base, au moins en partie, d'une proximité géographique de l'au moins un nœud de calcul périphérique (210) à l'itinéraire (250) ;
le déploiement (330) d'une instance respective du service jusqu'à chacun de l'au moins un nœud de calcul périphérique (210) de telle sorte que l'entité mobile (240) puisse y accéder alors que le parcours prévu est entrepris ; et
la fourniture (340) d'un plan de communication à l'entité mobile (240), le plan de communication indiquant la manière dont il est possible d'accéder à l'au moins une instance du service durant le parcours prévu.

2. Procédé (300) de la revendication 1, dans lequel une pluralité de nœuds de calcul périphériques (210) est sélectionnée, chaque nœud de calcul périphérique (210) étant associé à une portion respective de l'itinéraire (250) le long de laquelle il doit fournir le service à l'entité mobile (240) et étant sélectionné sur la base, au moins en partie, d'une proximité géographique du nœud de calcul périphérique (210) à la portion respective de l'itinéraire (250), facultativement dans lequel le déploiement de l'instance respective du service jusqu'à chacun des nœuds de calcul périphériques (210) comprend la planification du déploiement de chaque instance respective pendant un temps avant un temps auquel il est planifié que l'entité mobile (240) doive commencer la portion associée de l'itinéraire (250),
le procédé (300) comprenant facultativement :
l'élimination de l'instance respective du service déployé jusqu'à un nœud de calcul périphérique (210) après que l'entité mobile (240) a achevé la portion respective de l'itinéraire (250) le long de laquelle cette instance doit fournir le service à l'entité mobile (240).

3. Procédé (300) de l'une quelconque des revendications 1 ou 2, dans lequel le déploiement de l'instance respective du service jusqu'à chacun de l'au moins un nœud de calcul périphérique (210) comprend la planification du déploiement de chaque instance respective pendant un temps avant un commencement planifié du parcours prévu par l'entité mobile (240).

4. Procédé (300) de l'une quelconque des revendications précédentes, dans lequel la sélection d'un nœud de calcul périphérique (210) est en outre basée sur une ou plusieurs mesures enregistrées auparavant de communications entre un nœud d'accès radio (220) associé au nœud de calcul périphérique (210) et une ou plusieurs stations mobiles à proximité de l'itinéraire (250), facultativement dans lequel les mesures enregistrées auparavant comprennent une ou plusieurs mesures, ou la totalité des mesures, parmi :
une mesure de latence ;
une mesure d'indication d'intensité de signal reçue, Received Signal Strength Indication RSSI ;
une mesure de rapport signal-bruit, Signal-to-Noise Ratio SNR ;
une mesure de largeur de bande ; et
une mesure de taux d'erreur.

5. Procédé (300) de l'une quelconque des revendications précédentes, dans lequel plus d'un nœud de calcul périphérique (210) est sélectionné pour fournir le service à l'entité mobile (240) durant au moins une partie de l'itinéraire (250) et le plan de communication indique une pluralité d'options pour accéder au service durant cette partie de l'itinéraire (250).

6. Procédé (300) de l'une quelconque des revendications précédentes, dans lequel les instances du service déployé jusqu'à la pluralité de nœuds de calcul périphériques (210) sont configurées pour permettre à l'entité mobile (240) de maintenir la même configuration lors de la transition entre différentes instances du service.

7. Procédé mis en œuvre par ordinateur (400) réalisé par une entité mobile (240) d'accès à un service fourni par des nœuds de calcul périphériques (210) situés à la périphérie d'un réseau d'accès radio qui sont dispersés dans la totalité d'une zone géographique (230), le procédé comprenant :
la fourniture (410) d'un plan de déplacement au réseau d'accès radio, le plan de déplacement indiquant un itinéraire (250) pour un parcours que l'entité mobile (240) prévoit d'effectuer à travers la zone géographique (230) ;
la réception (420) d'un plan de communication en provenance du réseau d'accès radio, le plan de communication indiquant la manière dont il est possible d'accéder au service durant le parcours prévu à partir d'au moins un des nœuds de calcul périphériques (210) ; et
l'utilisation (430) du plan de communication pour accéder au service en communiquant avec l'au moins un nœud de calcul périphérique (210) alors que le parcours est entrepris.

8. Procédé (400) de la revendication 7, dans lequel :
le plan de communication indique qu'il faut accéder au service par l'intermédiaire d'une pluralité de nœuds de calcul périphériques (210), chaque nœud de calcul périphérique (210) étant associé à une portion respective de l'itinéraire (250) durant laquelle ce nœud de calcul périphérique (210) fournira le service pour l'entité mobile (240) ; et
l'utilisation du plan de communication pour accéder au service comprend la détermination d'un nœud de calcul périphérique approprié (210) avec lequel il faut communiquer, sur la base de la portion actuelle du parcours qui est en train d'être entrepris.

9. Procédé (400) de la revendication 7 ou de la revendication 8, dans lequel :
le plan de communication indique une pluralité d'options pour accéder au service durant au moins une partie de l'itinéraire (250), chaque option étant fournie par un nœud de calcul périphérique respectif (210) par l'intermédiaire duquel il est possible d'accéder au service durant cette partie de l'itinéraire (250) ; et
l'utilisation du plan de communication pour accéder au service alors que cette partie de l'itinéraire (250) est entreprise comprend la sélection d'un des nœuds de calcul périphériques (210) par l'intermédiaire duquel il faut accéder au réseau durant cette partie de l'itinéraire (250).

10. Procédé (400) de la revendication 9, comprenant en outre :
la surveillance d'une réalisation respective de l'accès au service par l'intermédiaire de chacun des nœuds de calcul périphériques (210) par l'intermédiaire duquel il est possible d'accéder au service durant cette partie de l'itinéraire (250) ; et
la détermination de passer à l'utilisation d'un différent nœud des nœuds de calcul périphériques (210) pour accéder au service durant cette partie de l'itinéraire (250) sur la base de la réalisation respective de l'accès au service par l'intermédiaire de chacun des nœuds de calcul périphériques (210),
facultativement dans lequel la détermination de passer est effectuée en réponse à la détection que :
la réalisation respective de l'accès au service par l'intermédiaire du nœud de calcul périphérique actuellement sélectionné (210) est inférieure à un seuil prédéterminé ; ou
une différence entre la réalisation de l'accès au service par l'intermédiaire du nœud de calcul périphérique actuellement sélectionné (210) et la réalisation de l'accès au service par l'intermédiaire d'un autre des nœuds de calcul périphériques (210) est supérieure à un seuil prédéterminé,
facultativement dans lequel la réalisation est déterminée sur la base d'une ou de plusieurs mesures, ou de la totalité des mesures, parmi :
une mesure de latence ;
une mesure d'indication d'intensité de signal reçue,
Received Signal Strength Indication RSSI ;
une mesure de rapport signal-bruit, Signal-to-Noise Ratio SNR ;
une mesure de largeur de bande ; et
une mesure de taux d'erreur.

11. Procédé (400) de l'une quelconque des revendications 8 à 10, dans lequel l'entité mobile (240) maintient la même configuration lors de la transition entre des instances du service sur différents nœuds de calcul périphériques (210).

12. Procédé (400) de l'une quelconque des revendications 7 à 11, dans lequel l'entité mobile (240) est un véhicule sans pilote, facultativement dans lequel l'entité mobile (240) est un véhicule aérien sans pilote.

13. Procédé (400) de la revendication 12, dans lequel le service est un service de réseau pour permettre la communication entre le véhicule sans pilote (240) et un serveur de commande destiné à commander le véhicule sans pilote (240), facultativement dans lequel le réseau service fournit un ou plusieurs services, ou la totalité des services, parmi :
un service de réseau privé virtuel, Virtual Private Network, VPN ;
un service de système de nom de domaine, Domain Name System DNS ;
un service de détection de logiciel malveillant ;
un service de prévention de logiciel malveillant ;
un service de système de détection d'intrusion, Intrusion Detection System IDS ;
un service de système de prévention d'intrusion, Intrusion Prevention System IPS ;
un service de pare-feu ; et
un service de protocole de configuration d'hôte dynamique, Dynamic Host Configuration Protocol DHCP.

14. Procédé (400) de la revendication 13, comprenant en outre l'accès à une instance respective d'un service d'application pour le véhicule sans pilote (240) qui est déployé jusqu'à chacun de l'au moins un nœud de calcul périphérique (210), en même temps que les instances du réseau service, facultativement dans lequel le service d'application comprend un ou plusieurs services, ou la totalité des services, parmi :
un service de commande destiné à commander le véhicule sans pilote (240) ;
un service de commande d'urgence destiné à commander automatiquement le véhicule sans pilote (240) dans le cas d'une défaillance de communication avec le serveur de commande ; et
un service de référentiel de télémétrie pour capturer une télémétrie en provenance du véhicule sans pilote (240).

15. Système d'ordinateur (100) comprenant un processeur (104) et une mémoire (102) stockant un code de programme d'ordinateur pour réaliser le procédé (300, 400) de l'une quelconque des revendications précédentes.

16. Programme d'ordinateur qui, lorsqu'il est exécuté par un ou plusieurs processeurs, est agencé pour effectuer un procédé (300, 400) selon l'une quelconque des revendications 1 à 14.
